# EUROPEAN PATENT APPLICATION

(11) **EP 2 413 632 A1**
(43) Date of publication of application: **01.02.2012**
(21) Application number: 10305833.5
(22) Date of filing: 28.07.2010
(51) Int. Cl.: H04W 36/14, H04W 8/06, H04W 80/04, H04L 29/06

(54) **Method of and apparatus for providing a flow of data to a mobile communication device**

(71) Applicant: FRANCE TELECOM, 75015 Paris (FR)
(72) Inventor: Duda, Adrian, LONDON, E17 7BT (GB)
(74) Representative: Cabinet Plasseraud

(57) **Abstract**

A method of and apparatus for providing a flow of data to a mobile communication device, the method comprising: receiving a notification that a mobile communication device, in the process of receiving a stream of data from an application server, is leaving a source network, selecting a target network for the mobile communication device to handover to when it leaves the source network; selecting a home agent device for receiving data of the data stream from the application server for forwarding to the mobile communication device; wherein data of the data stream not yet received by the mobile communication device from the application server is routed to the home agent device for forwarding to the mobile communication device; providing the application server with the target network address of the mobile communication device, to enable the application server to forward data of the data stream to the target network address when the mobile communication device is handed over to the target network.

## Description

### Field of the Invention

The present invention relates in general to a method and apparatus for providing a flow of data to a mobile communications device leaving a network. Particularly, but not exclusively the invention relates to a method and apparatus for providing session continuity when a mobile communication device moves from a source network to a target network.

### Background of the Invention

With the proliferation of multiple-mode wireless communication devices, the increasing availability of Mobile Broadband kits, the availability of more and more interesting wireless communication services and applications, as well as the tendency of an increasing number of users to use more and more high-bandwidth consuming applications, it becomes increasingly important to ensure a high quality of service for the user.

One of the requirements for maintaining the quality of service at an acceptable level for the users is to ensure that an ongoing application running on a user's device is not interrupted when the user moves between various networks and technologies by providing ongoing session continuity.

There have been a number of attempts to provide session continuity. In W02009103460, for example, a method is proposed for discovering a home agent serving a mobile node upon the mobile node changing its mobility management scheme. The mobile node repeats the transmission of a home agent discovery message to other home agents until a home agent indicates in a response message to be the home agent serving the mobile node. However the number of message exchanges required to obtain a home agent leads to a increase in the delay until the user can actually start a session.

W02009073101 describes a method for performing hand-off of a mobile communication device from a first wireless communication link to a second wireless communication link. THE UE communicates with two home agents, while sending de-registration message over the second wireless link requesting release of resources from the first wireless network link.

The drawback of such approaches is that they initiate a Mobile IP functionality by means of the exchange of Binding Update / Binding Acknowledgment messages between the Mobile IP software on the client and the Home Agent before there is an ongoing application, such as video streaming running, and the Mobile IP functionality (the exchanges between the Mobile IP software on the client and the home agent) is turned on even when the user is stationary. This means a higher burden on the network and unnecessary use of network resources. Moreover, the client needs to have a MobileIP software installed on the UE, and the device has to take care of all the home agent discovery and further messages, which has an adverse affect on the mobile device's overall performance.

### Summary of the Invention

Embodiments of the present invention propose a method to minimize service interruption and to assure the continuity of sessions running on a user's mobile communication device when the device is moved between networks.

Accordingly, a first aspect of the invention provides a method of providing a flow of data of a data stream to a mobile communication device moving from a source network to a target network, the method comprising: receiving a notification that the mobile communication device, in the process of receiving a stream of data from an application server, is leaving the source network selecting a target network for the mobile communication device to handover to when it leaves the source network; selecting a home agent device for receiving data of the data stream from the application server for forwarding to the mobile communication device; providing the application server with the home address of the home agent to enable the application server to transmit, to the home agent device, data of the data stream not yet transmitted to the mobile communication device, for forwarding to the mobile communication device; and providing the application server with the target network address of the mobile communication device, to enable the application server to forward data of the data stream, not yet received by the mobile communication device, to the target network address when the mobile communication device is handed over to the target network.

A second aspect of the invention provides a mobility management network device for managing a flow of data of a data stream to a remote mobile communication device moving from a source network to a target network, the mobility management network device comprising: reception means for receiving, from a mobile communication device, a notification that a mobile communication device, in the process of receiving a stream of data from an application server, is leaving the source network, network selection means for selecting a target network for the mobile communication device to connect to when it leaves the source network; home agent selection means for selecting a home agent device for receiving data of the data stream from the application server for forwarding to the mobile communication device; wherein data of the data stream not yet received by the mobile communication device from the application server is routed to the home agent device for forwarding to the mobile communication device; transmission means for transmitting, to the application address, the home address of the home agent to enable the application server to transmit, to the home agent device, data of the data stream not yet transmitted to the mobile communication device, for forwarding to the mobile communication device; transmitting the target network address of the mobile communication device to the application server, to enable the application server to forward data of the data stream to the target network address when the mobile communication device is handed over to the target network.

A third aspect of the invention provides a mobile communication device comprising: reception means for receiving a stream of data from a remote application server, the mobile device having a source network address when connected to a source network; transmission means for transmitting, to a mobility management network device, a notification that the mobile communication device, in the process of receiving the stream of data from the application server via the source network, is leaving the source network the reception means being operable to receive data of the stream of data not yet received from the application server, from a home agent using the source network address as a care of address; the device further comprising network handover means for receiving target network information, from the mobility management network device, the target network information indicating a target network selected by the mobility management network device, and for handing over from the source network to the selected target network; wherein the reception means is operable to receive data of the stream of data not yet received from the application server, via the target network.

A fourth aspect of the invention provides a home agent device comprising reception means for receiving a source network address of a mobile communication device in the process of receiving a data stream from an application via a source network to which the mobile communication is connected; home address selection means for selecting a home address for the mobile communication device; care of address setting means for setting the care of address of the mobile communication device as the source network address; data reception means for receiving from the application server data of the data stream not yet received by the mobile communication device; and data transmission means for transmitting the data received from the application server to the care of address of the mobile communication device.

A fifth aspect of the invention provides an application server for providing a data stream to a mobile communication device, the application server comprising: data transmission means for transmitting a data stream to a mobile communication device having a source network address of a source network; means for receiving instructions to transmit, to a home agent, data of the data stream being transmitted to the mobile communication device; data stream determination means for determining from which time stamp of the data stream to send new data of the data stream which has not yet been transmitted to the mobile communication device; wherein the transmission means is operable to send the new data to the home agent in response to the received instruction; data stream closing means to close the transmission of data to the source network address in response to a data stream closing instruction and wherein the means for receiving instructions is operable to receive instructions to transmit, to a target network address, data of the data stream being transmitted to the mobile communication device; the data stream determination means is operable to determine from which time stamp of the data stream to send further new data of the data stream which has not yet been transmitted to the mobile communication device; the transmission means is operable to send the further new data to the target network address in response to the received instruction; and the data stream closing means is operable to close the transmission of data to the home agent address in response to a further data closing instruction.

In embodiments of the invention
- the notification is only transmitted from the mobile communication device in the case where the flow of data from the application to the mobile communication device is to be maintained.
- the step of providing the application server with the home address of the home agent may include receiving an acknowledgement from the selected home agent including a home address for receiving data for the mobile communication device; providing the application server with the received home address; and informing the application server to stop sending data to the source network address.
- the method may include instructing the mobile communication device to hand over to the selected target network; receiving, from the mobile communication device, the target network address of the mobile communication device; notifying the application server of the target network address; informing the application server to stop sending data to the home address; and informing the home agent to stop forwarding data to the source network address.
- the home agent may be selected according to the network technology of the source network and the network technology of the target network.
- the reception means may be operable to receive an acknowledgement from the home agent including a home address for receiving data for the mobile communication device; the transmission means is operable to transmit the received home address to the application server; the device further comprising notification means for informing the application server to stop sending data to the source network address.
- the mobile management network entity may further include network notification means for instructing the mobile communication device to hand over to the selected target network; and the reception means may be operable to receive, from the mobile communication device, the target network address of the mobile communication device; the transmission means may be operable to transmit the target network address to the application server ; the notification means may be operable to inform the application server to stop sending data to the home address, and to inform the home agent to stop forwarding date to the source network address.
- the home agent selection means may be operable to select the home agent according to the network technology of the source network and the network technology of the target network.
- the home agent may include notification means for notifying a mobility management device that the data of the data stream has been forwarded from the application server to the mobile communication device.

The methods according to the invention may be computer implemented. The methods may be implemented in software on a programmable apparatus. They may also be implemented solely in hardware or in software, or in a combination thereof.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

A further aspect of the invention may thus provide a computer readable medium having computer-executable instructions to enable a computer system to perform the methods described above.

### Brief Description of the Drawings

Embodiments of the invention will now be described, by way of example only, and with reference to the following drawings in which:-
Figure 1 is a schematic diagram of network entities and a source network and a target network of a mobile communication device according to embodiments of the invention; and
Figures 2.1 and 2.2 are communication diagrams of a method of providing data flow to or from a mobile communication device according to a first embodiment of the invention.

### Detailed description

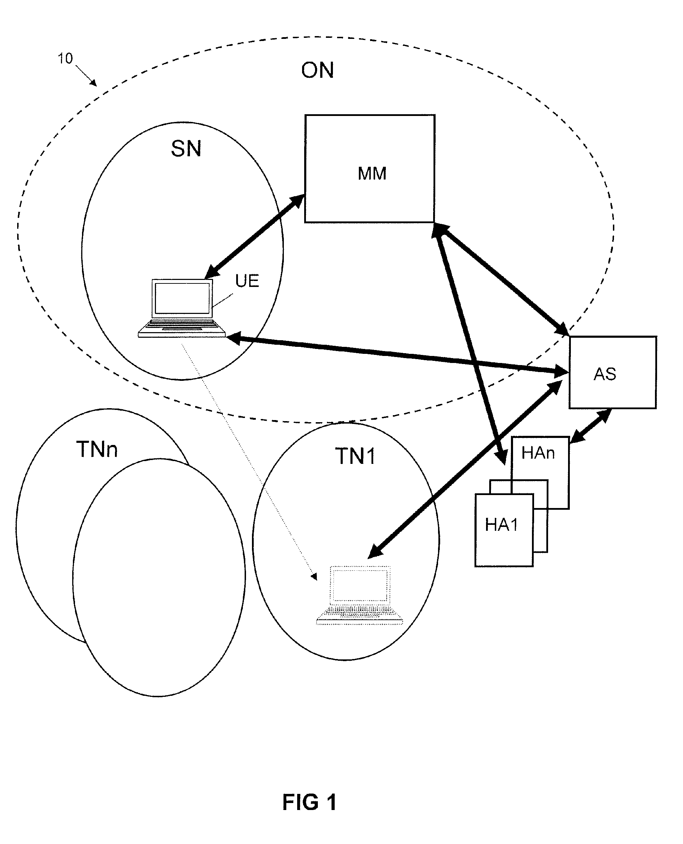

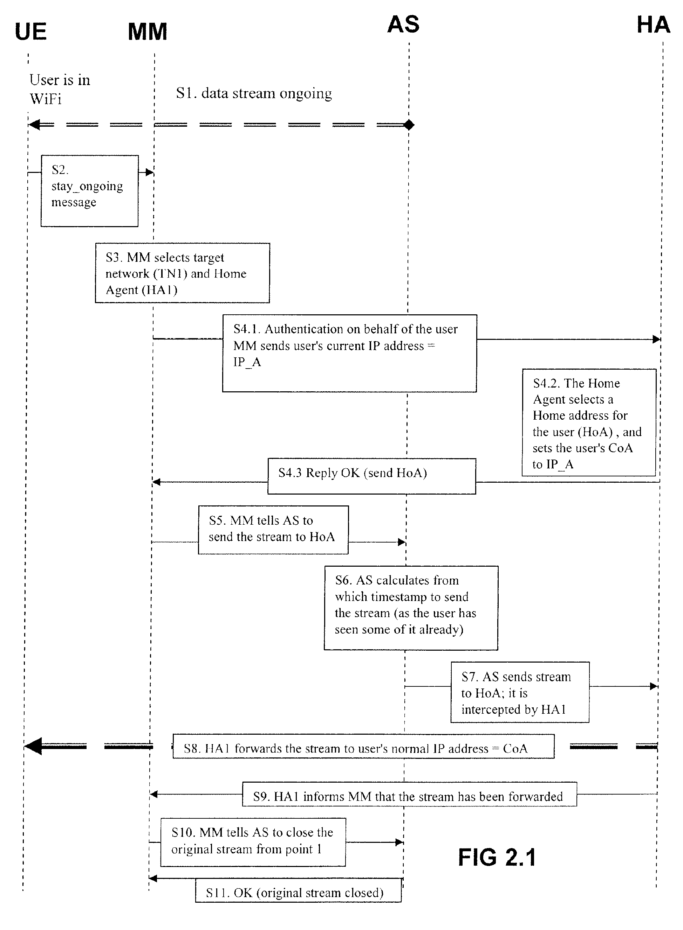

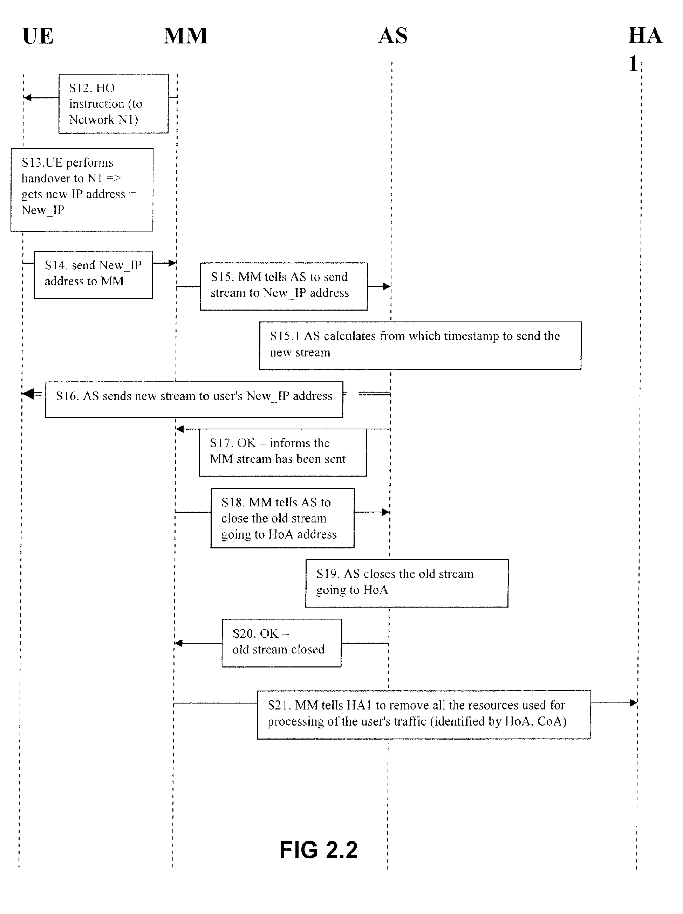

A method of and system for providing data flow to or from a mobile communication device according to a first embodiment of the invention will be described with reference to Figures 1 and 2.

Figure 1 conceptually illustrates a first exemplary embodiment of a wireless communication system 10. The wireless communication system includes a source network, SN based on a mobility internet protocol (MIP) network to which a user equipment UE is initially connected and a number of target networks TN1 to TNn which the UE may access if it moves out of the coverage of the source network SN and into the coverage of one of the target networks T1.. Tn. The UE is connected to a network mobility management node MM that manages the mobility of the user equipment UE between the different networks. The mobility management node MM is connected to a number of home agents HA1...HAn, and at least one application server AS providing data traffic to and/or from the user equipment UE. The data provided to the user equipment UE from the application server AS may be video and/or audio data such as a video stream or any other form of data.

Portions of each network SN , TN1...TNn may operate according to various wireless communications standards and protocols, including but not limited to 3G, WiFi and the like. A number of home agents per network may be provided, and each agent may operate according to a different wireless access technology.

The user equipment UE in this embodiment of the invention may be any portable wireless communication device such as a portable computer, portable digital assistant (PDA), mobile telephone or the like. Preferably such a user equipment (UE) is a multiple mode unit that is capable of communicating using multiple wire access technologies such as, for example, WiFi, 2G, 3G, 4G etc.

An exemplary operation of the method according to the first embodiment of the invention will now be described. The user equipment UE is initially connected to a network at home, the source network SN, via a WiFi connection. The user launches a live TV or video stream application for receiving a video stream from application server AS in order to view a movie for example on the user equipment. The user then decides to leave home but wishes to continue to watch the movie uninterrupted even when he goes outside the WiFi coverage of the source network SN.

At this stage, in order to be able to continue to watch the movie in good quality conditions without session interruption, the user triggers emission of an automatic message to the mobility manager MM in the operator's network to inform the mobility manager MM that the user equipment UE is about to leave the home network SN but still wants to view the session that has already started. At this stage, a message exchange follows between the mobility manager MM, the application server AS and other entities of the wireless communication system in order to provide session continuity during the handover process from the source network SN to a target network TN. During the handover process, the data stream is sent via different routes and using different wireless access technology, but as soon as the user equipment UE has been successfully handed over to the new target network TN and the streaming traffic is running in the new network, all the resources that were used to process the data traffic during the handover process will be released. This process will be described below in more detail.

In an initial step the user equipment UE notifies the mobility manager MM that the user equipment UE is moving away from the source network SN while an ongoing application receiving a data stream is running and that the ongoing application should be continued without interruption if the user equipment leaves the source network SN to within the coverage of a target network TN. In a particular embodiment the notification is triggered by the user pressing a button on the user equipment while enables client software running on the user equipment UE to inform automatically the mobility management entity MM in the mobile operator network by means of a simple message "stay ongoing" that is interpreted by the mobility manager as "the user is using an ongoing application, and the user is likely to leave its current area while still wanting to continue watching the application without interruption". It will be appreciated that in other embodiments of the invention such notification may be automatically triggered in a number of ways known to the skilled person in the field.

The mobility manager has links with a number n of home agents (HA1 to HAn). In general a HA serves one geographical area. There may be two or more categories of home agents. One category of home agents who deal with the traffic from user equipments who have been in WiFi networks, and another category of home agents that deal with the traffic from users who have been using cellular (3G) networks etc. Typically the handover process from 3G to WiFi takes longer than the handover from WiFi to 3G. As a result the processing (and hence the processor power and other dedicated resources on these HA-s)which is done in home agents addressed for user equipped who are coming from WiFi networks is less than the processing that has to be done in home agents addressed for users who are going to WiFi.

When the mobility manager MM receives the message "stay ongoing" from the client software in the user equipment UE, it means that the user equipment UE will likely need a different network for data communication than the one it is currently connected to.

In a subsequent step, the mobility manager MM will determine which target network TN1 to TNn will provide the coverage in the region the user equipment is heading to, and which Home Agent should be used. The target network TN and home agent determination is based on the following criteria: the first criterion is the geographical area in which the user equipment is currently in. In one geographical area, the user equipment may connect to more networks. Also, in one area there may be more home agents available. The second criterion is the load at the target home agents. For each home agent, the mobility manager MM will keep track of the respective load according to the processing tasks that the mobility manager MM has delegated to that respective home agent HA.

For each home agent HA, the mobility manager MM will compute the load of that particular home agent HA as follows. First, it will consider the value of the current load in the home agent HA. Then the mobility manager MM adds to current home agent load, the estimated load on the home agent HA after the mobility manager MM has delegated to that home agent HA any further processing tasks to be performed based on other "stay ongoing" requests which the mobility manager MM has received from other user equipment devices. From this calculated load value, the load coming from the users which are in the process of finishing the network switchover are deducted, since these user equipments will no longer need the home agent.

A third factor taken into account by the mobility management node MM to determine the target network TN and home agent HA for the hand over is the traffic load in the target network TN itself. The determined traffic load is given by the current load in the target network, added to an estimated load after the mobility management node MM has finished processing the requests already received from other user equipment devices, and for which the mobility management node has already decided to link the user equipments to that respective target network. From this value the traffic load coming from the user traffic of any user equipment devices which are about to be switched from that respective target network to a different network will then be deducted.

When the user equipment comes from a WiFi source network SN, the mobility management node MM chooses a home agent HA from among only the home agents HAs which are dedicated to processing data traffic coming from user equipments who are leaving a WiFi source network. If the user equipment is about to go on a WiFi target network TN, the mobility management node MM chooses a home agent HA from among only the home agents which are dedicated to processing data traffic coming from user equipments who have been in a source network of a network technology other than WiFi network technology.

Based on the process outlined above, the mobility management node MM selects the most appropriate network for the user equipment to connect to in the next step, along with a home agent HA that will take care of the session continuity processing.

The mobile communication device is provided with a software module configured to send a notification message to the remote mobility management node MM to inform it that wishes to maintain an ongoing session when leaving a network and to inform the mobility management node MM of its new IP address after handover from a source network to a target network has been performed.

Figure 2 illustrates the sequence of messages exchanged between the various network entities of the wireless communication system according to an embodiment of the invention, in which UE represents the user equipment device, MM the mobility management network node, AS the application server, and HA1 the home agent.

In step S1 the user equipment is connected to a source WiFi network SN and, the user has launched a data traffic application such as video streaming to receive video streaming data from the application server AS.

In step S2 the client software of the user equipments sends the message "stay ongoing" to the mobility management network node MM, indicating that the user equipment is about to leave its current location and the source wifi network SN and wishes to be able to watch the ongoing application without interruption.

In step S3 the mobility management node MM selects target network TN1 and Home Agent HA1, for the switch over of the user equipment according to the process described above

In step S4.1 the mobility management network node MM exchanges with home agent HA1 an authentication message on behalf of the user equipment UE. This step is for the management network node MM to inform the home agent HA1 that the respective user equipment is using an application requiring the provision of session continuity. The mobility management network node MM sends the user equipment's current IP address (=IP_A) to the home agent HA1.

In step S4.2 the Home Agent HA1 selects a Home Address (HoA)for the user equipment, and sets the user equipments Care of Address CoA to IP_A (the user equipment's current IP address)

In step S4.3, the application server AS sends an OK Reply to the management network node MM, which includes the Home Address HoA allocated by the HA1

In step S5, the management network node MM tells the application server AS to send a new video stream of the ongoing application to the allocated home address HoA

In step S6 the application server AS calculates from which timestamp to send the video stream, as the user equipment will have already received a portion of the video stream.

In step S7, the application server AS sends new video stream data to the allocated home address HoA. Because the Home Address HoA logically belongs to the network associated with the home agent HA1, normal IP routing mechanisms forward the video packets constituting the new video stream to the home agent HA1.

In step S8, the home agent HA1 forwards the video stream to the user's Care of Address CoA which is the current IP address IP_A

In step S9 the handover agent HA1 informs the mobility management node MM that the video stream has been forwarded

In step S10, the mobility management node MM tells the application server AS to close the original video stream being sent to the source network SN in step 1.

In step S11, the application server AS closes the original video stream and sends an OK message to the mobility management node MM

In step S12. the mobility management node MM sends a handover instruction message to the user equipment UE, informing it to handover to target network TN1 (that the mobility management node MM has selected in step S3)

In step S13, the user equipment performs handover from source network SN to target network TN1, as instructed by the mobility management node MM (N1 can be cellular 3G network for example). The device will get a new IP address (=New_IP) in the new target network TN1

In step S14 the user equipment UE sends a new IP address New_IP address to the mobility management node MM corresponding to a new network that the user equipment has connected to

In step S15 the mobility management node MM tells the application server AS to send new video streams of the ongoing application to New_IP address

In step S15.1, the application server AS calculates from which timestamp to send the new video stream (since a portion of the video stream will have already been sent to the user equipment)

In step S16, the application server AS sends new video stream data to user's New_IP address

In step S17, the application AS sends an OK message to the mobility management node MM - i.e. it informs the mobility management node MM that the new video stream has been sent to the user equipment UE

In step S18, the mobility management node MM tells the application server AS to close the old video stream being transmitted to the home address HoA address

In step S19, the application server AS closes the old stream going to the Home Address HoA

In step S20, the applications server AS sends an OK message to mobility manager MM to say that the old video stream has been closed

In step S21 the mobility management node tells the home agent HA1 to remove all the resources used for processing of the user's traffic (the user identified by HoA, CoA).

The methods according to the embodiments of the invention help to ensure the continuity of a user's session with minimal use of the device's and network's resources. A user may continue to watch the data stream with a good quality of service, without interruption during the handover process.

Since the mobile management network device is a network node distinct from the mobile communication device this helps to eliminate the need for a dedicated mobile IP client on the mobile communication device, because this function can be performed by the network. Moreover since the Mobile IP processing function is performed on the network side only when the user indicates to the network that he wishes to maintain his ongoing application when leaving the network, processing overhead is reduced. If for example the user does not wish to maintain session continuity a notification is not sent to the mobile management network device and the subsequent processing does not need to be performed.

Although the present invention has been described hereinabove with reference to specific embodiments, the present invention is not limited to the specific embodiments, and modifications will be apparent to a skilled person in the art which lie within the scope of the present invention.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of providing a flow of data of a data stream to a mobile communication device moving from a source network to a target network, the method comprising:
receiving, from a remote mobile communication device, a notification that the mobile communication device, in the process of receiving a stream of data from an application server, is leaving the source network,
selecting a target network for the mobile communication device to handover to when it leaves the source network;
selecting a home agent device for receiving data of the data stream from the application server for forwarding to the mobile communication device;
providing the application server with the home address of the home agent to enable the application server to transmit, to the home agent device, data of the data stream not yet transmitted to the mobile communication device, for forwarding to the mobile communication device; and
providing the application server with the target network address of the mobile communication device, to enable the application server to forward data of the data stream, not yet received by the mobile communication device, to the target network address when the mobile communication device is handed over to the target network.

2. A method according to claim 1, wherein the step of providing the application server with the home address of the home agent further comprises:
receiving an acknowledgement from the selected home agent including a home address for receiving data for the mobile communication device;
providing the application server with the received home address; and
informing the application server to stop sending data to the source network address.

3. A method according to claim 1 or 2 further comprising:
instructing the mobile communication device to hand over to the selected target network;
receiving, from the mobile communication device, the target network address of the mobile communication device;
notifying the application server of the target network address;
informing the application server to stop sending data to the home address; and
informing the home agent to stop forwarding data to the source network address.

4. A method according to any one of the preceding claims, wherein the home agent is selected according to the network technology of the source network and the network technology of the target network.

5. A mobility management network device for managing a flow of data of a data stream to a remote mobile communication device moving from a source network to a target network, the mobility management network device comprising:
reception means for receiving, from the remote mobile communication device, a notification that a mobile communication device, in the process of receiving a stream of data from an application server, is leaving the source network,
network selection means for selecting a target network for the mobile communication device to connect to when it leaves the source network;
home agent selection means for selecting a home agent device for receiving data of the data stream from the application server for forwarding to the mobile communication device; wherein data of the data stream not yet received by the mobile communication device from the application server is routed to the home agent device for forwarding to the mobile communication device; transmission means for
transmitting, to the application address, the home address of the home agent to enable the application server to transmit, to the home agent device, data of the data stream not yet transmitted to the mobile communication device, for forwarding to the mobile communication device;
transmitting the target network address of the mobile communication device to the application server, to enable the application server to forward data of the data stream to the target network address when the mobile communication device is handed over to the target network.

6. A mobility management network device according to claim 5, wherein
the reception means is operable to receive an acknowledgement from the home agent including a home address for receiving data for the mobile communication device;
the transmission means is operable to transmit the received home address to the application server; the device further comprising
notification means for informing the application server to stop sending data to the source network address.

7. A mobility management network device according to claim 5 or 6, further comprising:
network notification means for instructing the mobile communication device to hand over to the selected target network; and wherein
the reception means is operable to receive, from the mobile communication device, the target network address of the mobile communication device;
the transmission means is operable to transmit the target network address to the application server ;
the notification means is operable to inform the application server to stop sending data to the home address, and to inform the home agent to stop forwarding date to the source network address.

8. A mobility management network device according to any one of claims 5 to 7, wherein the home agent selection means is operable to select the home agent according to the network technology of the source network and the network technology of the target network.

9. A mobile communication device comprising:
reception means for receiving a stream of data from an application server, the mobile device having a source network address when connected to a source network;
transmission means for transmitting, to a remote mobility management network device, a notification that the mobile communication device, in the process of receiving the stream of data from the application server via the source network, is leaving the source network,
the reception means being operable to receive data of the stream of data not yet received from the application server, from a home agent using the source network address as a care of address; the device further comprising
network handover means for receiving target network information, from the mobility management network device, the target network information indicating a target network selected by the mobility management network device, and for handing over from the source network to the selected target network;
wherein the reception means is operable to receive data of the stream of data not yet received from the application server, via the target network.

10. A home agent device comprising
reception means for receiving a source network address of a mobile communication device in the process of receiving a data stream from an application via a source network to which the mobile communication is connected;
home address selection means for selecting a home address for the mobile communication device;
care of address setting means for setting the care of address of the mobile communication device as the source network address;
data reception means for receiving from the application server data of the data stream not yet received by the mobile communication device; and
data transmission means for transmitting the data received from the application server to the care of address of the mobile communication device.

11. A home agent according to claim 10, further comprising
notification means for notifying a mobility management device that the data of the data stream has been forwarded from the application server to the mobile communication device.

12. An application server for providing a data stream to a remote mobile communication device, the application server comprising:
data transmission means for transmitting a data stream to a mobile communication device having a source network address of a source network;
means for receiving instructions to transmit, to a home agent, data of the data stream being transmitted to the mobile communication device;
data stream determination means for determining from which time stamp of the data stream to send new data of the data stream which has not yet been transmitted to the mobile communication device; wherein the transmission means is operable to send the new data to the home agent in response to the received instruction;
data stream closing means to close the transmission of data to the source network address in response to a data stream closing instruction and wherein
the means for receiving instructions is operable to receive instructions to transmit, to a target network address, data of the data stream being transmitted to the mobile communication device;
the data stream determination means is operable to determine from which time stamp of the data stream to send further new data of the data stream which has not yet been transmitted to the mobile communication device;
the transmission means is operable to send the further new data to the target network address in response to the received instruction; and
the data stream closing means is operable to close the transmission of data to the home agent address in response to a further data closing instruction.

13. A method of providing a flow of data to a mobile communication device, the method comprising:
receiving a source network address of a mobile communication device in the process of receiving a data stream from an application server via a source network to which the mobile communication is connected;
selecting a home address for the mobile communication device;
setting a care of address of the mobile communication device as the source network address;
receiving, from the application server, data of the data stream not yet received by the mobile communication device; and
transmitting the data received from the application server to the care of address of the mobile communication device.

14. A method of transmitting a data stream to a mobile communication device, the method comprising:
transmitting a data stream to a remote mobile communication device having a source network address of a source network;
receiving instructions to transmit, to a home agent, data of the data stream being transmitted to the mobile communication device;
determining from which time stamp of the data stream to send new data of the data stream which has not yet been transmitted to the mobile communication device;
transmitting the new data to the home agent;
closing transmission of data to the source network address in response to a data stream closing instruction
receiving instructions to transmit, to a target network address, data of the data stream being transmitted to the mobile communication device;
determining from which time stamp of the data stream to send further new data of the data stream which has not yet been transmitted to the mobile communication device;
transmitting the further new data to the target network address; and
closing transmission of data to the home agent address.

15. A computer-readable medium having computer-executable instructions to enable a computer system to perform the method of any one of claims 1 to 4, or 13 or 14.
